# EUROPÄISCHE PATENTSCHRIFT

(11) **EP 3 070 436 B1**
(45) Veröffentlichungstag und Bekanntmachung des Hinweises auf die Patenterteilung: **16.05.2018**
(21) Anmeldenummer: 16152689.2
(22) Anmeldetag: 26.01.2016
(51) Int. Cl.: G01D 5/20, G01D 5/22, G01D 18/00

(54) **POSITIONSMESSSYSTEM MIT KALIBRIERMITTELN**
POSITION MEASURING SYSTEM WITH CALIBRATION MEANS
SYSTEME DE MESURE DE POSITION COMPRENANT DES MOYENS D'ETALONNAGE

(30) Priorität: 26.02.2015 DE 102015203403
(43) Veröffentlichungstag der Anmeldung: 21.09.2016
(73) Patentinhaber: ROBERT BOSCH GMBH, 70442 Stuttgart (DE)
(72) Erfinder: Muehlfeld, Johannes, 97072 Wuerzburg (DE)
(74) Vertreter: Maiß, Harald

(56) Entgegenhaltungen:
- EP-A1- 1 164 358
- DE-A1- 19 803 249
- DE-A1-102011 106 940
- FR-A1- 2 999 363

## Beschreibung

Die Erfindung betrifft ein Positionsmesssystem gemäß dem Oberbegriff von Anspruch 1 und ein Verfahren zu dessen Betrieb.

Aus der DE 10 2008 018 355 A1 ist ein Positionsmesssystem bekannt. Weiter ist auf die deutsche Patentanmeldung mit dem Aktenzeichen 10 2014 216 036.7 (DE 10 2015 213 784 A1, spät veröffentlicht) hinzuweisen.

Aus der FR 2 999 363 A1 D1 ist ein Positionsmesssystem mit einem induktiven Sensor bekannt, mit dem die Position eines beweglichen Elements relativ zu dem induktiven Sensor ermittelbar ist. Der induktive Sensor umfasst dabei eine Senderspule und zwei Empfängerspulen. Durch Variation der Position des Elements relativ zu dem induktiven Sensor und damit der Senderspule verändert sich das durch die Senderspule bei

Anlegen einer Wechselspannung hervorgerufene Magnetfeld, welches damit wiederum eine entsprechende Spannung in den Empfängerspulen und erzeugt.

Weitere Positionsmesssysteme sind beispielsweise aus der DE 10 2011 106 940 A1, der EP 1 164 358 A1 sowie der DE 198 03 249 A1 bekannt.

Die vorliegende Erfindung betrifft ein Positionsmesssystem mit einer Maßverkörperung und einer Abtastvorrichtung, welche bezüglich einer Messrichtung beweglich zueinander sind. Die Maßverkörperung weist eine Vielzahl von Markierungen auf, die bezüglich der Messrichtung in einer Reihe angeordnet sind. Die Abtastvorrichtung weist eine Senderwindungsanordnung auf. Weiter sind in der Abtastvorrichtung mehrere Empfängerspulen vorgesehen, die bezüglich der Messrichtung derart in einer Reihe angeordnet sind, dass die induktive Kopplung zwischen der Senderwindungsanordnung und den Empfängerspulen abhängig von der Stellung der Abtastvorrichtung gegenüber der Maßverkörperung ist.

Ein Vorteil der vorliegenden Erfindung besteht darin, dass die Auswertung der in die Empfängerspulen induzierten Spannungen auch dann problemlos möglich ist, wenn die Empfängerspulen unterschiedliche elektrische Eigenschaften aufweisen. Die Empfängerspulen sind vorzugsweise als planare Spulen ausgebildet, welche höchst vorzugsweise mit einem photochemischen Ätzverfahren hergestellt sind. Hierbei kann es aufgrund von Fertigungsungenauigkeiten zu Windungskurzschlüssen kommen, so dass der ohmsche Widerstand und die Induktivität der verschiedenen Empfängerspulen nicht gleich ist. Eine weitere Folge von Fertigungsungenauigkeiten sind Toleranzen hinsichtlich der Dicke und der Breite der Leiterbahnen. Weiter ist das Positionsmesssystem unempfindlich gegenüber äußeren Störfeldern.

Gemäß dem Anspruch 1 wird vorgeschlagen, dass wenigstens ein Operationsverstärker mit einer ersten und einer zweiten Ausgangsanschlussstelle vorgesehen ist, wobei die Empfängerspulen über eine Schaltvorrichtung derart mit dem wenigstens einen Operationsverstärker verbunden sind, dass wahlweise eine einzelne Empfängerspule oder ein einziges Paar von differentiell zusammengeschalteten Empfängerspulen eingangsseitig an den wenigstens einen Operationsverstärker anschließbar ist.

Gemäß dem Anspruch 5 wird ein Verfahren zum Betrieb des vorstehenden Positionsmesssystems vorgeschlagen, wobei die erste und die zweite Ausgangsanschlussstelle des wenigstens einen Operationsverstärkers eine Messspannung definieren, wobei das Verfahren nacheinander folgende Schritte umfasst:
a) Bewegen der Abtastvorrichtung in eine Kalibrierstellung, in der sie räumlich entfernt von der Maßverkörperung angeordnet ist, so dass die Maßverkörperung die induktive Kopplung zwischen der Senderwindungsanordnung und den Empfängerspulen nicht beeinflusst;
b) Speisung der Senderwindungsanordnung mit einem Wechselstrom und Messung mehrerer unterschiedlicher Kalibrier-Messspannungen M_{n,1}; M_{n,2}; Mₙ in der Kalibrierstellung der Abtastvorrichtung, wobei jeweils entweder eine einzelne Empfängerspule oder ein einziges Paar von differentiell zusammengeschalteten Empfängerspulen eingangsseitig an den wenigstens einen Operationsverstärker angeschlossen ist;
c) Bewegen der Abtastvorrichtung in eine Arbeitsstellung, in der sie so gegenüberliegend zur Maßverkörperung angeordnet ist, dass die Maßverkörperung die induktive Kopplung zwischen der Senderwindungsanordnung und den Empfängerspulen beeinflusst;
d) Speisung der Senderwindungsanordnung mit einem Wechselstrom und Messung mehrerer unterschiedlicher Arbeits-Messspannungen M_{n,n+1} in der Arbeitsstellung der Abtastvorrichtung, wobei jeweils ein einziges Paar von differentiell zusammengeschalteten Empfängerspulen eingangsseitig an den wenigstens einen Operationsverstärker angeschlossen ist; und
e) Verrechnung der Kalibrier-Messspannungen M_{n,1}; M_{n,2}; Mₙ und der Arbeits-Messspannung M_{n,n+1} zu mehreren Auswertefaktoren Aₙ.

Vorzugsweise werden die Markierungen von Durchbrüchen in einem Metallband gebildet, wobei der Mittenabstand der Durchbrüche in Messrichtung jeweils ein ganzzahliges Vielfaches eines konstanten, ersten Teilungsabstands λ ist. Vorzugsweise codieren die Markierungen eine Zufallszahlenfolge, höchst vorzugsweise eine binäre Zufallszahlenfolge, wobei jede beliebige Auswahl einer Anzahl m unmittelbar benachbarter Markierungen verschieden von jeder beliebigen anderen Auswahl einer Anzahl m unmittelbar benachbarter Markierungen ist. Damit kann die absolute Position der Abtastvorrichtung gegenüber der Maßverkörperung bestimmt werden. Vorzugsweise weisen die Empfängerspulen in Messrichtung einen konstanten zweiten Teilungsabstand δ auf, wobei die Bedingung r × λ = s × δ gilt, wobei r und s ganze Zahlen sind, für die s > r gilt. Damit kommt es für die Positionsbestimmung nicht darauf an, welche Zwischenstellung die Abtastvorrichtung bezüglich des Teilungsrasters der Maßverkörperung aufweist. Die erste und die zweite Ausgangsanschlussstelle sind vorzugsweise eingangsseitig an einen Analog-Digital-Wandler angeschlossen, um die Messspannung zu messen.

Im Rahmen des Schrittes d sind die differentiell zusammengeschalteten Empfängerspulen vorzugsweise derart benachbart angeordnet, dass zwischen ihnen keine andere Empfängerspule angeordnet ist. Im Rahmen des Schrittes a wird die Kalibrierstellung vorzugsweise so gewählt, dass die genannte induktive Kopplung ausschließlich durch die Abtastvorrichtung selbst und die umgebende Luft beeinflusst wird. Vorzugsweise wird die Abtastvorrichtung in der Kalibrierstellung von äußeren elektromagnetischen Feldern abgeschirmt. Die Auswertefaktoren Aₙ können bei der Bestimmung der absoluten Stellung der Abtastvorrichtung gegenüber der Maßverkörperung genauso behandelt werden wie die induzierten Spannungen, die unmittelbar an idealen Empfängerspulen gemessen werden. Die Spannung an einem Paar von differentiell zusammengeschalteten Empfängerspulen entspricht der mathematischen Differenz der entsprechenden Auswertefaktoren. Vorzugsweise ist die Abtastvorrichtung bezüglich der Messrichtung beweglich relativ zur Maßverkörperung geführt, wobei der entsprechende Führungseingriff in der Kalibrierstellung höchst vorzugsweise aufgehoben ist.

Durch den Operationsverstärker werden die schwachen induzierten Spannungen an den Empfängerspulen verstärkt, so dass sie beispielsweise durch einen Analog-Digital-Wandler einfach gemessen werden können. Der Operationsverstärker wird vorzugsweise in unmittelbarer räumlicher Nähe zu den Empfängerspulen angeordnet, so dass die schwachen induzierten Spannungen nur über kurze Leitungswege geführt werden müssen, wodurch wenig Signalstörungen auftreten. Aufgrund der vorstehenden Anordnung ist die Messspannung nicht allein von der stellungsabhängigen induktiven Kopplung zwischen Senderwindungsanordnung und Empfängerspulen abhängig. Vielmehr haben auch der ohmsche Widerstand und die Induktivität der Empfängerspulen Einfluss auf die Messspannung. Darüber hinaus hängt Messspannung von der Auslegung des Operationsverstärkers und von weiteren Parametern ab. Demgegenüber hängen die Auswertefaktoren Aₙ nahezu ausschließlich von der Markierung ab, welche sich vor der betreffenden Empfängerspule befindet, selbst dann, wenn einzelne Empfängerspulen Windungskurzschlüsse aufweisen.

In den abhängigen Ansprüchen sind vorteilhafte Weiterbildungen und Verbesserungen der Erfindung angegeben.

Es kann vorgesehen sein, dass der Operationsverstärker volldifferentiell ausgebildet ist. Volldifferentielle Operationsverstärker sind beispielsweise aus dem Dokument bekannt, welches am 29.01.2015 unter der Internetadresse http://www.ti.com/lit/an/sloa054d/sloa054d.pdf abrufbar war. Die vorliegenden Empfängerspulen können auf besonders einfache Weise an einen volldifferentiellen Operationsverstärker angeschlossen werden, so dass dessen hohe Störunempfindlichkeit besonders einfach ausgenutzt werden kann.

Es kann vorgesehen sein, dass die Senderwindungsanordnung mehrere gesonderte Senderflächen umgrenzt, die bezüglich der Messrichtung in einer Reihe angeordnet sind, wobei in den Senderflächen jeweils höchstens eine einzige Empfängerspule angeordnet ist. Hierdurch wird erreicht, dass alle Empfängerspulen betragsmäßig im Wesentlichen dem gleichen Senderfeld ausgesetzt sind. Das entsprechende Positionsmesssystem arbeitet besonders zuverlässig.

Es kann vorgesehen sein, dass die Markierungen von Durchbrüchen in einem Metallband gebildet werden, wobei die Markierungen eine Zufallszahlenfolge codieren, welche so ausgewählt ist, dass in jeder Stellung der Abtastvorrichtung gegenüberliegend zur Maßverkörperung wenigstens eine Empfängerspule vollständig vor einem Durchbruch in der Maßverkörperung angeordnet ist. Die genannte Empfängerspule liefert daher in der Arbeitsstellung eine Messspannung, die sehr genau der Messspannung in der Kalibrierstellung entspricht. Ausgehend von dieser Messspannung können die Auswertefaktoren Aₙ auf besonders einfache Weise berechnet werden.

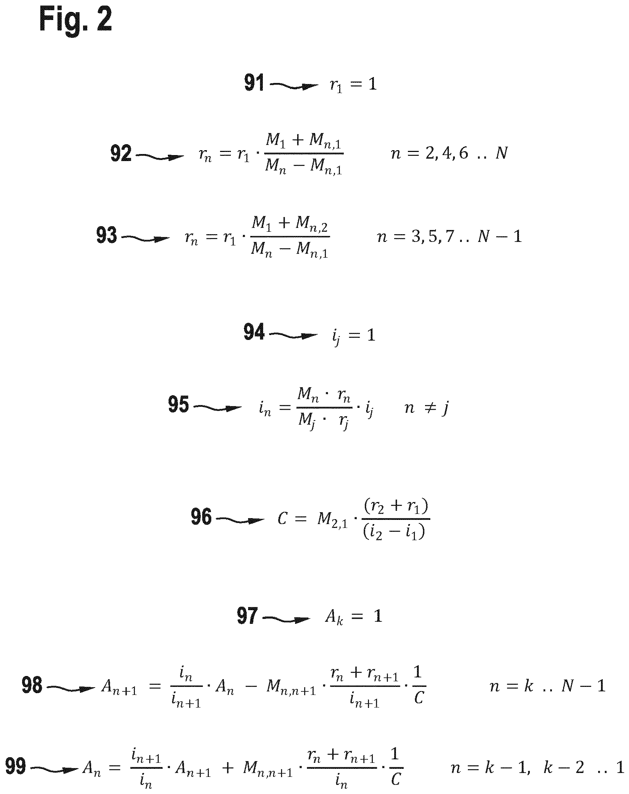

Es kann vorgesehen sein, dass im Rahmen des Schrittes b eine Messung mehrerer Kalibrier-Messspannungen erster Art M_{n,1} erfolgt, wobei jeweils eine differentielle Zusammenschaltung einer ersten Referenzspule aus den Empfängerspulen und einer weiteren Empfängerspule aus einer ersten Teilmenge der Empfängerspulen eingangsseitig an den Operationsverstärker angeschlossen ist. Die erste Referenzspule ist dementsprechend nicht in der ersten Teilmenge enthalten. Mit den Kalibrier-Messspannungen erster Art M_{n,1} können auf einfache Weise die Auswertefaktoren Aₙ berechnet werden, wobei wegen weiterer Details auf die Ausführungen zu Fig. 2 verwiesen wird.

Es kann vorgesehen sein, dass im Rahmen des Schrittes b eine Messung mehrerer Kalibrier-Messspannungen zweiter Art M_{n,2} erfolgt, wobei jeweils eine differentielle Zusammenschaltung einer zweiten Referenzspule aus den Empfängerspulen und einer weiteren Empfängerspule aus einer zweiten Teilmenge der Empfängerspulen eingangsseitig an den Operationsverstärker angeschlossen ist, wobei die erste Referenzspule verschieden von der zweiten Referenzspule ist, wobei die erste Teilmenge verschieden von der zweiten Teilmenge ist. Die zweite Referenzspule kann in der ersten Teilmenge enthalten sein. Mit den Kalibrier-Messspannungen zweiter Art M_{n,2} können auf einfache Weise die Auswertefaktoren Aₙ berechnet werden, wobei wegen weiterer Details auf die Ausführungen zu Fig. 2 verwiesen wird.

Es kann vorgesehen sein, dass die Empfängerspulen in Messrichtung betrachtet jeweils abwechselnd der ersten oder der zweiten Teilmenge zugeordnet sind.

Es kann vorgesehen sein, dass in Messrichtung zwischen der ersten und der zweiten Referenzspule keine andere Empfängerspule angeordnet ist.

Es kann vorgesehen sein, dass zwischen der ersten Referenzspule und einer Empfängerspule aus der ersten Teilmenge keine andere Empfängerspule angeordnet ist, wobei zwischen der zweiten Referenzspule und einer Empfängerspule aus der zweiten Teilmenge keine andere Empfängerspule angeordnet ist.

Es kann vorgesehen sein, dass im Rahmen des Schrittes e zuerst eine Start-Empfängerspule ermittelt wird, bei der es sich um diejenige Empfängerspule handelt, welche am idealsten gegenüberliegend zu einem Durchbruch in der Maßverkörperung angeordnet ist, wobei die Verrechnung ausgehend von einer Arbeits-Messspannung M_{n,n+1} durchgeführt wird, welche der Start-Empfängerspule zugeordnet ist.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im Folgenden anhand der beigefügten Zeichnungen näher erläutert. Es zeigt:
- Fig. 1: eine grobschematische Darstellung eines erfindungsgemäßen Positionsmesssystems; und
- Fig. 2: mehrere mathematische Formeln, mit denen aus den Messspannungen M_{n,1}; M_{n,2}; Mₙ; M_{n,n+1} die Auswertefaktoren Aₙ ermittelt werden können.

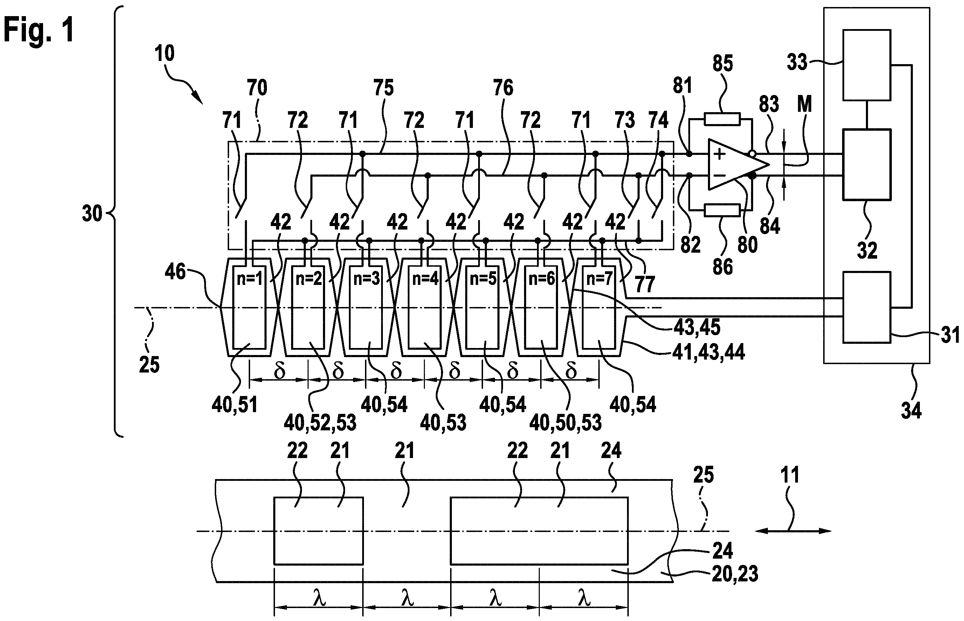

Fig. 1 zeigt eine grobschematische Darstellung eines erfindungsgemäßen Positionsmesssystems 10. Das Positionsmesssystem 10 umfasst eine Maßverkörperung 20 und eine Auswertevorrichtung 30. Die Maßverkörperung 20 ist als Metallband 23 ausgeführt, das beispielsweise aus nichtrostendem Stahl besteht, wobei es beispielsweise eine konstante Dicke von 0,3 mm aufweist. Die Maßverkörperung 20 erstreckt sich mit einer konstanten Breite in eine Messrichtung 11. Entlang der Messrichtung 11 ist auf der Maßverkörperung 20 eine Vielzahl von Markierungen 21 in einer Reihe angeordnet, welche einen konstanten ersten Teilungsabstand λ aufweisen. Die Markierungen 21 können vorliegend zwei Zustände aufweisen, wobei im ersten Fall ein Durchbruch im Metallband 23 vorhanden ist, wobei im zweiten Fall kein Durchbruch im Metallband 23 vorhanden ist. Die Durchbrüche 22 sind vorliegend rechteckig ausgebildet. Zwei in Messrichtung unmittelbar benachbarte Durchbrüche 21 gehen unterbrechungsfrei ineinander über. Quer zur Messrichtung 11 zu beiden Seiten der Durchbrüche 22 hat das Metallband 23 je einen Seitensteg, so dass sich eine zusammenhängende Maßverkörperung 20 ergibt. Die Durchbrüche 22 sind vorzugsweise als mit Luft gefüllter Freiraum ausgebildet. Sie können aber auch mit einem Material ausgefüllt sein, welches verschieden vom Material des Metallbandes 23 ist, beispielsweise mit Messing.

Die Abtastvorrichtung 30 ist in Messrichtung 11 beweglich gegenüber der Maßverkörperung 20. Vorzugsweise ist die Maßverkörperung 20 an der Führungsschiene eines Linearwälzlagers befestigt, wobei die Abtastvorrichtung 30 am zugeordneten Führungswagen befestigt ist. Ein entsprechendes Linearwälzlager ist aus der DE 10 2007 042 796 A1 bekannt. Die Abtastvorrichtung 30 umfasst eine Auswertebaugruppe 34, welche vorzugsweise in Form einer gesonderten elektronischen Platine ausgebildet ist. Der verbleibende Rest der Auswertevorrichtung 30, namentlich die Senderwindungsanordnung 41, die Empfängerspulen 40, die Schaltvorrichtung 70 und der Operationsverstärker 80 sind in der Arbeitsstellung in unmittelbarer räumlicher Nähe zur Maßverkörperung 20 angeordnet, während die Auswertebaugruppe 34 demgegenüber einen größeren räumlichen Abstand zur Maßverkörperung 20 aufweisen kann.

Die Senderwindungsanordnung 41 und die Empfängerspulen 40 sind jeweils als planare Windungsanordnungen ausgebildet. In Fig. 1 ist jeweils nur ein Windungsumlauf eingezeichnet, wobei sowohl die Senderwindungsanordnung 41 als auch die Empfängerspulen 40 tatsächlich jeweils eine Vielzahl von im Wesentlichen parallelen Windungsumläufen aufweisen. In Fig. 1 ist sowohl in der Senderwindungsanordnung 41 als auch in der Maßverkörperung 20 eine Mittellinie 25 eingezeichnet. Diese beiden Mittellinien 25 liegen, entgegen der Darstellung in Fig. 1, in einer Arbeitsstellung der Positionsmesssystem 10 deckungsgleich übereinander, wobei die Senderwindungsanordnung 41 und die Empfängerspulen 40 mit geringem Abstand zur Maßverkörperung 20 angeordnet sind. Damit beeinflusst die Maßverkörperung 20 die induktive Kopplung zwischen der Senderwindungsanordnung 41 und den Empfängerspulen 40.

Die Senderwindungsanordnung 41 ist vorliegende als Mäanderstruktur ausgebildet, wobei sie mehrere gesonderte Senderflächen 42 umgrenzt, welche in Messrichtung 11 in einer Reihe angeordnet sind. Die Senderwindungsanordnung 41 umfasst eine erste und zweite Gruppe 44; 45 von schlangenlinienartig ausgebildeten Leiterbahnen 43, welche sich entlang der Messrichtung 11 mehrfach kreuzen. An der mit der Nr. 46 gekennzeichneten Stelle sind die genannten Leiterbahnen 43 derart miteinander verbunden, dass die Senderwindungsanordnung 41 von einer einzigen durchgehenden Leiterbahn gebildet wird. Auf Grund von Fertigungsfehlern kann es aber vorkommen, dass Windungskurzschlüsse vorhanden sind. Die Senderwindungsanordnung 41 kann alternativ auch aus mehreren einzelnen Spulen zusammengesetzt sein, die jeweils eine einzige zugeordnete Senderfläche 42 umgrenzen, wobei sie wahlweise in Reihe oder parallel geschaltet sind. Wenn die Senderwindungsanordnung 41 von der Wechselstromquelle 31 mit einem Wechselstrom gespeist wird, ergibt sich in allen Senderflächen 42 ein betragsmäßig im Wesentlichen gleiches elektromagnetisches Wechselfeld, wobei die Feldrichtung in unmittelbar benachbarten Senderflächen 42 entgegengesetzt ist. Die Wechselstromquelle 31 ist vorzugsweise Bestandteil der Auswertebaugruppe 34.

In den Senderflächen 42 ist jeweils eine einzige Empfängerspule 40 angeordnet. In räumlicher Nähe zu den Empfängerspulen 40 ist der Operationsverstärker 80 angeordnet, der vorzugsweise volldifferentiell ausgebildet ist. Die Beschaltung des Operationsverstärkers 80 ist in Fig. 1 stark vereinfacht dargestellt, wobei nur die zwei für den volldifferentiellen Operationsverstärker 80 kennzeichnenden Rückkopplungswiderstände 85; 86 dargestellt sind. Der erste Rückkopplungswiderstand 85 verbindet die erste Eingangsanschlussstelle 81 des Operationsverstärkers 80 mit der ersten Ausgangsanschlussstelle 83 des Operationsverstärkers 80. Der zweite Rückkopplungswiderstand 86 verbindet die zweite Eingangsanschlussstelle 82 des Operationsverstärkers 80 mit der zweiten Ausgangsanschlussstelle 84 des Operationsverstärkers 80.

An der ersten und der zweiten Ausgangsanschlussstelle 83; 84 liegt die Messspannung M an. Die erste und die zweite Ausgangsanschlussstelle 83; 84 sind eingangsseitig an einen Analog-Digital-Wandler 32 angeschlossen, so dass der Analog-Digital-Wandler 32 die Messspannung M messen kann. Der entsprechende Digitalwert wird an einen programmierbaren Digitalrechner 32 weitergegeben, welcher die mit Bezug auf Fig. 2 beschriebenen Berechnungen digital durchführt. Der programmierbare Digitalrechner 33 und der Analog-Digital-Wandler 32 sind vorzugsweise Bestandteil der Auswertebaugruppe 34, wobei sie höchst vorzugsweise in Form eines Mikrocontrollers ausgebildet sind.

Die erste und die zweite Eingangsanschlussstelle 81; 82 sind über eine Schaltvorrichtung 70 mit den verschiedenen Empfängerspulen 40 verbunden. Die Schaltvorrichtung 70 umfasst eine erste Signalleitung 75, welche an die erste Eingangsanschlussstelle 81 des Operationsverstärkers 80 angeschlossen ist. Weiter ist eine zweite Signalleitung 76 an die zweite Eingangsanschlussstelle 82 des Operationsverstärkers 80 angeschlossen. Jeweils ein Anschluss einer jeden Empfängerspule 40 ist an eine dritte Signalleitung 77 angeschlossen. Der jeweils andere Anschluss einer Empfängerspule 40 ist über ein zugeordnetes Schaltmittel 71; 72 entweder mit der ersten oder mit der zweiten Signalleitung 75; 76 verbunden. Vorzugsweise weist jedes Schaltmittel 71; 72; 73; 74 einen ersten Zustand auf, in dem es einen ersten elektrischen Widerstand hat, wobei es einen zweiten Zustand aufweist, in dem es einen zweiten elektrischen Widerstand hat, wobei der zweite elektrische Widerstand wenigstens 1000-mal größer als der erste elektrische Widerstand ist, wobei das wenigstens eine Schaltmittel zwischen dem ersten und dem zweiten Zustand umschaltbar ist. Im Rahmen der vorliegenden Anmeldung wird davon ausgegangen, dass eine Empfängerspule 40 im zweiten Zustand des zugeordneten Schaltmittels 71; 72 nicht an den Operationsverstärker 80 angeschlossen ist. Vorzugsweise werden Schaltmittel 71; 72; 73; 74 auf der Basis von Halbleitern verwendet. Damit kann beispielsweise ein erster elektrischer Widerstand von 0,9 Ω erreicht werden, wobei ein zweiter elektrischer Widerstand erreicht werden kann, der eine Signaldämpfung von wenigstens 60 dB ergibt. Ein entsprechendes Schaltmittel ist Gegenstand des Datenblatts, welches am 23.02.2015 unter der Internetadresse http://www.ti.com/lit/ds/symlink/ts5a623157.pdf abrufbar war.

In Fig. 1 sind beispielhaft sieben Empfängerspulen 40 dargestellt, die jeweils mit einem Index n gekennzeichnet sind, der entlang der Messrichtung hochzählt. Es versteht sich, dass das Positionsmesssystem 10 wesentlich mehr, beispielsweise 30 Empfängerspulen 40, aufweisen kann. Die Empfängerspulen 40 mit den Indizes n= 1, 3, 5, 7 sind jeweils über ein erstes Schaltmittel 71 mit der ersten Signalleitung 75 verbunden. Die jeweils dazwischen angeordneten Empfängerspulen 40 mit den Indizes n= 2, 4, 6 sind jeweils über ein zweites Schaltmittel 72 mit der zweiten Signalleitung 76 verbunden. Die Messspannung M_{3,4} (zwei Indizes) ist beispielsweise die Messspannung M die sich ergibt, wenn die Schaltmittel 71; 72, welche den Empfängerspulen 40 mit den Indizes n=3 und n=4 zugeordnet sind, geschlossen sind, wobei die übrigen Schaltmittel offen sind. Die vorstehend beschriebene Verschaltung führt dazu, dass die beiden gewählten Empfängerspulen differentiell zusammengeschaltet sind, wobei sie eingangsseitig an den Operationsverstärker 80 angeschlossen sind. Dementsprechend wirken sich äußere Störfelder, die auf beide genannten Empfängerspulen 40 in gleicher Weise einwirken, nicht auf die Messspannung M_{3,4} aus. Für die ordnungsgemäße differentielle Zusammenschaltung zweier Empfängerspulen kommt es auf die Windungsrichtung der betreffenden Empfängerspulen und darauf, welcher Anschluss mit der dritten Signalleitung 77 verbunden ist, an.

Die Messspannung M₂ (ein Index) ist beispielsweise die Messspannung M, welche sich ergibt, wenn das zweite Schaltmittel 72 geschlossenen ist, welches der Empfängerspule 40 mit dem Index n=2 zugeordnet ist, wobei im Übrigen allein das vierte Schaltmittel 74 geschlossen ist. Mit dem vierten Schaltmittel 74 wird die dritte Signalleitung 77 mit der ersten Eingangsanschlussstelle 81 der Operationsverstärkers 80 verbunden. Damit ist allein die einzelne Empfängerspule 40 mit dem Index n=2 eingangsseitig an den Operationsverstärker 80 angeschlossen. Wenn eine einzelne Empfängerspule 40 verwendet werden soll, die über ein erstes Schaltmittel 71 mit der ersten Signalleitung 75 verbunden ist, wird im Übrigen allein das dritte Schaltmittel 73 geschlossen. Mit dem dritten Schaltmittel 73 wird die dritte Signalleitung 77 mit der zweiten Eingangsanschlussstelle 82 der Operationsverstärkers 80 verbunden.

Die ersten bis vierten Schaltmittel 71; 72; 73; 74 werden vorzugsweise von dem programmierbaren Digitalrechner 33 angesteuert, wobei die entsprechenden Steuerleitungen in Fig. 1 nicht dargestellt sind.

Die Kalibrierstellung der Abtastvorrichtung 30 ist eine Stellung, in der die Abtastvorrichtung 30 räumlich entfernt von der Maßverkörperung 20 angeordnet ist, so dass die Maßverkörperung 20 die induktive Kopplung zwischen der Senderwindungsanordnung 41 und den Empfängerspulen 40 nicht beeinflusst. Soweit das Positionsmesssystem 10, wie oben angesprochen, Bestandteil eines Linearwälzlagers ist, wird der Führungswagen hierfür von der Führungsschiene abgenommen. In der Kalibrierstellung werden beim Ausführungsbeispiel nach Fig. 1 die Kalibrier-Messspannungen erster Art M_{2,1}; M_{4,1}; M_{6,1}, die Kalibrier-Messspannungen zweiter Art M_{3,2}; M_{5,2}; M_{7,2} und die Kalibrier-Messspannungen dritter Art M₁; M₂; M₃; M₄; M₅; M₆; M₇ gemessen, vorzugsweise mittels des Analog-Digital-Wandlers 32.

Die Arbeitsstellung der Abtastvorrichtung 30 ist eine Stellung, in der die Abtastvorrichtung 30 so gegenüberliegend zur Maßverkörperung 20 angeordnet ist, dass die Maßverkörperung 20 die induktive Kopplung zwischen der Senderwindungsanordnung 41 und den Empfängerspulen 40 beeinflusst. In der Arbeitsstellung findet also die normale Positionsmessung statt. In der Arbeitsstellung werden beim Ausführungsbeispiel nach Fig. 1 die Arbeits-Messspannungen M_{1,2}; M_{2,3}; M_{3,4}; M_{4,5}; M_{6;7} gemessen.

Anzumerken ist, dass die Empfängerspulen 40 mit den Indizes n=1 und n=2 die erste und die zweite Referenzspule 51; 52 bilden.

Fig. 2 zeigt mehrere mathematische Formeln, mit denen aus den Messspannungen M_{n,1}; M_{n,2}; Mₙ; M_{n,n+1} die Auswertefaktoren Aₙ ermittelt werden können. Mit der ersten, der zweiten und der dritten Formel 91; 92; 93 kann für jede der sieben Empfängerspulen in Fig. 1 ein Widerstandsfaktor rₙ berechnet werden. Dem Widerstandsfaktor r₁ kann grundsätzlich jeder beliebige Zahlenwert zugeordnet werden, wobei die Wertezuordnung gemäß der ersten Formel 91 besonders einfach anzuwenden ist.

Mit der vierten und der fünften Formel 94; 95 kann für jede der sieben Empfängerspulen in Fig. 1 ein Induktionsfaktor iₙ berechnet werden. Der Index j bezeichnet dabei den Index einer bezüglich der Messrichtung 11 in der Mitte angeordneten Empfängerspule. Beim Beispiel nach Fig. 1 wäre der Index j = 4. Bei einer graden Anzahl von Empfängerspulen kann jeder der beiden mittleren Indizes verwendet werden. Grundsätzlich ist es sogar möglich für j den Index einer beliebigen Empfängerspule zu verwenden, wobei hierunter die Berechnungsgenauigkeit leidet. Dem Induktionsfaktor iⱼ kann grundsätzlich jeder beliebige Wert zugeordnet werden, wobei die Wertezuordnung gemäß der vierten Formel 94 besonders einfach anzuwenden ist.

Mit der sechsten Formel 96 kann eine Sensorkonstante C berechnet werden. Die Berechnungen der gemäß der ersten bis sechsten Formel 91 - 96 können bereits ausgeführt werden, nachdem die Schritte a und b des erfindungsgemäßen Verfahrens durchgeführt wurden.

In der Arbeitsstellung wird zuerst der Index k der Empfängerspule ermittelt, die am idealsten vor einem Durchbruch 22 der Maßverkörperung 20 steht. Im Ausführungsbeispiel nach Fig. 1 ist das die Empfängerspule 50 mit dem Index k = 6. Die induktive Kopplung zwischen dieser Start-Empfängerspule 50 und der Senderwindungsanordnung 41 ist besonders schlecht. Dieses Verhalten kann zur Ermittlung der Start-Empfängerspule 50 ausgenutzt werden. Soweit mehrere derartige Empfängerspulen vorhanden sind, kommt es nicht darauf an, welche als Start-Empfängerspule 50 gewählt wird.
Mit der siebten bis neunten Formel 97; 98; 99 kann für jede Empfängerspule ein Auswertefaktor Aₙ berechnet werden. Wenn die obige Auswahl der Start-Empfängerspule 50 korrekt war, ist keiner der Auswertefaktoren Aₙ kleiner als Eins. In jedem Fall sollte kein Auswertefaktor Aₙ deutlich kleiner als Eins sein. Wenn dies doch der Fall ist, muss eine andere Start-Empfängerspule ausgewählt werden.

Dem Auswertefaktor Aₖ kann grundsätzlich jeder beliebige Zahlenwert zugeordnet werden, wobei die Wertezuordnung gemäß der siebten Formel 97 besonders einfach anzuwenden ist.
Die Auswertefaktoren Aₙ können bei der Bestimmung der absoluten Stellung der Abtastvorrichtung 30 gegenüber der Maßverkörperung 20 genauso behandelt werden wie die induzierten Spannungen, die unmittelbar an idealen Empfängerspulen gemessen werden. Ein entsprechendes Verfahren ist in der deutschen Patentanmeldung mit dem Aktenzeichen 10 2014 216 036.7 beschrieben. Dabei ist anzumerken, dass die dort verwendeten Differenzspannungen der mathematischen Differenz Aᵢ - Aⱼ den zugeordneten Auswertefaktoren Aₙ entsprechen.

### Bezugszeichen

- λ: erster Teilungsabstand
- δ: zweiter Teilungsabstand
- m: Breite des Zufallscodes
- n: Index einer Empfängerspule
- N: Anzahl der Empfängerspulen
- j: Index der/einer mittleren Empfängerspule
- k: Index einer Empfängerspule, die vor einem Durchbruch steht

- M: Messspannung
- M_{n,1}: Kalibrier-Messspannung erster Art
- M_{n,2}: Kalibrier-Messspannung zweiter Art
- Mₙ: Kalibrier-Messspannung dritter Art
- M_{n,n+1}: Arbeits-Messspannung

- rₙ: Widerstandsfaktor
- iₙ: Induktionsfaktor
- C: Sensorkonstante

- Aₙ: Auswertefaktor

- 10: Positionsmesssystem
- 11: Messrichtung

- 20: Maßverkörperung
- 21: Markierung
- 22: Durchbruch
- 23: Metallband
- 24: Seitensteg
- 25: Mittellinie
- 30: Abtastvorrichtung
- 31: Wechselstromquelle
- 32: Analog-Digital-Wandler
- 33: programmierbarer Digitalrechner
- 34: Auswertebaugruppe

- 40: Empfängerspule
- 41: Senderwindungsanordnung
- 42: Senderfläche
- 43: schlangenlinienartige Leiterbahn
- 44: erste Gruppe
- 45: zweite Gruppe
- 46: Grenze zwischen den zwei Gruppen von schlangenlinienartigen Leiterbahnen

- 50: Start-Empfängerspule vor einem Durchbruch in der Maßverkörperung
- 51: erste Referenzspule
- 52: zweite Referenzspule
- 53: Empfängerspule aus der ersten Teilmenge
- 54: Empfängerspule aus der zweiten Teilmenge

- 70: Schaltvorrichtung
- 71: erstes Schaltmittel
- 72: zweites Schaltmittel
- 73: drittes Schaltmittel
- 74: viertes Schaltmittel
- 75: erste Signalleitung
- 76: zweite Signalleitung
- 77: dritte Signalleitung

- 80: Operationsverstärker
- 81: erste Eingangsanschlussstelle des Operationsverstärkers
- 82: zweite Eingangsanschlussstelle des Operationsverstärkers
- 83: erste Ausgangsanschlussstelle des Operationsverstärkers
- 84: zweite Ausgangsanschlussstelle des Operationsverstärkers
- 85: erster Rückkopplungswiderstand
- 86: zweiter Rückkopplungswiderstand

- 91: erste Formel
- 92: zweite Formel
- 93: dritte Formel
- 94: vierte Formel
- 95: fünfte Formel
- 96: sechste Formel
- 97: siebte Formel
- 98: achte Formel
- 99: neunte Formel

## Patentansprüche

1. Positionsmesssystem (10) mit einer Maßverkörperung (20) und einer Abtastvorrichtung (30), welche bezüglich einer Messrichtung (11) beweglich zueinander sind, wobei die Maßverkörperung (20) eine Vielzahl von Markierungen (21) aufweist, die bezüglich der Messrichtung (11) in einer Reihe angeordnet sind, wobei die Abtastvorrichtung (30) eine Senderwindungsanordnung (41) aufweist, wobei mehrere Empfängerspulen (40) vorgesehen sind, die bezüglich der Messrichtung (11) derart in einer Reihe angeordnet sind, dass die induktive Kopplung zwischen der Senderwindungsanordnung (41) und den Empfängerspulen (40) abhängig von der Stellung der Abtastvorrichtung (30) gegenüber der Maßverkörperung (20) ist,
**dadurch gekennzeichnet, dass** wenigstens ein Operationsverstärker (80) mit einer ersten und einer zweiten Ausgangsanschlussstelle (83; 84) vorgesehen ist, wobei die Empfängerspulen (40) über eine Schaltvorrichtung (70) derart mit dem wenigstens einen Operationsverstärker (80) verbunden sind, dass wahlweise eine einzelne Empfängerspule (40) oder ein einziges Paar von differentiell zusammengeschalteten Empfängerspulen (40) eingangsseitig an den wenigstens einen Operationsverstärker (80) anschließbar ist.

2. Positionsmesssystem nach Anspruch 1,
wobei der Operationsverstärker (80) volldifferentiell ausgebildet ist.

3. Positionsmesssystem nach einem der vorstehenden Ansprüche,
wobei die Senderwindungsanordnung (41) mehrere gesonderte Senderflächen (42) umgrenzt, die bezüglich der Messrichtung (11) in einer Reihe angeordnet sind, wobei in den Senderflächen (42) jeweils höchstens eine einzige Empfängerspule (40) angeordnet ist.

4. Positionsmesssystem nach einem der vorstehenden Ansprüche,
wobei die Markierungen (21) von Durchbrüchen in einem Metallband (23) gebildet werden, wobei die Markierungen (21) eine Zufallszahlenfolge codieren, welche so ausgewählt ist, dass in jeder Stellung der Abtastvorrichtung (30) gegenüberliegend zur Maßverkörperung (20) wenigstens eine Empfängerspule (50) vollständig vor einem Durchbruch in der Maßverkörperung (20) angeordnet ist.

5. Verfahren zum Betrieb eines Positionsmesssystems (10) nach einem der vorstehenden Ansprüche,
wobei die erste und die zweite Ausgangsanschlussstelle (83; 84) des wenigstens einen Operationsverstärkers (80) eine Messspannung (M) definieren, wobei das Verfahren nacheinander folgende Schritte umfasst:
a) Bewegen der Abtastvorrichtung (30) in eine Kalibrierstellung, in der sie räumlich entfernt von der Maßverkörperung (20) angeordnet ist, so dass die Maßverkörperung (20) die induktive Kopplung zwischen der Senderwindungsanordnung (41) und den Empfängerspulen (40) nicht beeinflusst;
b) Speisung der Senderwindungsanordnung (41) mit einem Wechselstrom und Messung mehrerer unterschiedlicher Kalibrier-Messspannungen M_{n,1}; M_{n,2}; Mₙ in der Kalibrierstellung der Abtastvorrichtung (30), wobei jeweils entweder eine einzelne Empfängerspule (40) oder ein einziges Paar von differentiell zusammengeschalteten Empfängerspulen (40) eingangsseitig an den wenigstens einen Operationsverstärker (80) angeschlossen ist;
c) Bewegen der Abtastvorrichtung (30) in eine Arbeitsstellung, in der sie so gegenüberliegend zur Maßverkörperung (20) angeordnet ist, dass die Maßverkörperung (20) die induktive Kopplung zwischen der Senderwindungsanordnung (41) und den Empfängerspulen (40) beeinflusst;
d) Speisung der Senderwindungsanordnung (41) mit einem Wechselstrom und Messung mehrerer unterschiedlicher Arbeits-Messspannungen M_{n,n+1} in der Arbeitsstellung der Abtastvorrichtung (30), wobei jeweils ein einziges Paar von differentiell zusammengeschalteten Empfängerspulen (40) eingangsseitig an den wenigstens einen Operationsverstärker (80) angeschlossen ist; und
e) Verrechnung der Kalibrier-Messspannungen M_{n,1}; M_{n,2}; Mₙ und der Arbeits-Messspannungen M_{n,n+1} zu mehreren Auswertefaktoren Aₙ, wobei die Spannung an einem Paar von differentiell zusammengeschalteten Empfängerspulen der mathematischen Differenz der entsprechenden Auswertefaktoren entspricht.

6. Verfahren nach Anspruch 5,
wobei im Rahmen des Schrittes b eine Messung mehrerer Kalibrier-Messspannungen erster Art M_{n,1} erfolgt, wobei jeweils eine differentielle Zusammenschaltung einer ersten Referenzspule (51) aus den Empfängerspulen (40) und einer weiteren Empfängerspule (40) aus einer ersten Teilmenge (53) der Empfängerspulen (40) eingangsseitig an den Operationsverstärker (80) angeschlossen ist.

7. Verfahren nach Anspruch 6,
wobei im Rahmen des Schrittes b eine Messung mehrerer Kalibrier-Messspannungen zweiter Art M_{n,2} erfolgt, wobei jeweils eine differentielle Zusammenschaltung einer zweiten Referenzspule (52) aus den Empfängerspulen (40) und einer weiteren Empfängerspule (40) aus einer zweiten Teilmenge (54) der Empfängerspulen (40) eingangsseitig an den Operationsverstärker (80) angeschlossen ist, wobei die erste Referenzspule (51) verschieden von der zweiten Referenzspule (52) ist, wobei die erste Teilmenge (53) verschieden von der zweiten Teilmenge (54) ist.

8. Verfahren nach Anspruch 7,
wobei die Empfängerspulen (40) in Messrichtung (11) betrachtet jeweils abwechselnd der ersten oder der zweiten Teilmenge (53; 54) zugeordnet sind.

9. Verfahren nach Anspruch 7 oder 8,
wobei in Messrichtung (11) zwischen der ersten und der zweiten Referenzspule (51; 52) keine andere Empfängerspule (40) angeordnet ist.

10. Verfahren nach einem der Ansprüche 7 bis 9,
wobei zwischen der ersten Referenzspule (51) und einer Empfängerspule aus der ersten Teilmenge (53) keine andere Empfängerspule (40) angeordnet ist, wobei zwischen der zweiten Referenzspule (52) und einer Empfängerspule aus der zweiten Teilmenge (54) keine andere Empfängerspule (40) angeordnet ist.

11. Verfahren nach einem der Ansprüche 5 bis 10,
wobei im Rahmen des Schrittes e zuerst eine Start-Empfängerspule (50) ermittelt wird, bei der es sich um diejenige Empfängerspule (40) handelt, welche am idealsten, also direkt gegenüberliegend zu einem Durchbruch (22) in der Maßverkörperung (20) angeordnet ist, wobei die Verrechnung ausgehend von einer Arbeits-Messspannung M_{n,n+1} durchgeführt wird, welche der Start-Empfängerspule (50) zugeordnet ist.

## Claims

1. Position measurement system (10) having a material measure (20) and a sampling device (30), which are arranged movably with respect to one another relative to a measurement direction (11), the material measure (20) having a multiplicity of markings (21), which are arranged in a row relative to the measurement direction (11), the sampling device (30) having a transmitter winding arrangement (41), a plurality of receiver coils (40) being provided, which are arranged in a row relative to the measurement direction (11) in such a way that the inductive coupling between the transmitter winding arrangement (41) and the receiver coils (40) is dependent on the position of the sampling device (30) relative to the material measure (20),
**characterized in that** at least one operational amplifier (80) having a first and a second output terminal (83; 84) is provided, the receiver coils (40) being connected via a switching device (70) to the at least one operational amplifier (80) in such a way that a single receiver coil (40) or a single pair of differentially interconnected receiver coils (40) can selectively be connected on the input side to the at least one operational amplifier (80).

2. Position measurement system according to Claim 1, wherein the operational amplifier (80) is configured fully differentially.

3. Position measurement system according to one of the preceding claims,
wherein the transmitter winding arrangement (41) encloses a plurality of separate transmitter surfaces (42), which are arranged in a row relative to the measurement direction (11), at most a single receiver coil (40) respectively being arranged in the transmitter surfaces (42).

4. Position measurement system according to one of the preceding claims,
wherein the markings (21) are formed by openings in a metal strip (23), the markings (21) encoding a random number sequence which is selected in such a way that, in each position of the sampling device (30) facing the material measure (20), at least one receiver coil (50) is arranged fully in front of an opening in the material measure (20).

5. Method for operating a position measurement system (10) according to one of the preceding claims,
wherein the first and the second output terminals (83; 84) of the at least one operational amplifier (80) define a measurement voltage (M), the method successively comprising the following steps:
a) moving the sampling device (30) into a calibration position, in which it is arranged spatially separated from the material measure (20), so that the material measure (20) does not influence the inductive coupling between the transmitter winding arrangement (41) and the receiver coils (40);
b) supplying the transmitter winding arrangement (41) with an alternating current and measuring a plurality of different calibration measurement voltages M_{n,1}; M_{n,2}; Mₙ in the calibration position of the sampling device (30), either a single receiver coil (40) or a single pair of differentially interconnected receiver coils (40) respectively being connected on the input side to the at least one operational amplifier (80);
c) moving the sampling device (30) into a working position, in which it is arranged facing the material measure (20) in such a way that the material measure (20) influences the inductive coupling between the transmitter winding arrangement (41) and the receiver coils (40);
d) supplying the transmitter winding arrangement (41) with an alternating current and measuring a plurality of different working measurement voltages M_{n,n+1} in the working position of the sampling device (30), a single pair of differentially interconnected receiver coils (40) respectively being connected on the input side to the at least one operational amplifier (80) ;
e) calculating a plurality of evaluation factors Aₙ from the calibration measurement voltages M_{n,1}; M_{n,2}; Mₙ and the working measurement voltages M_{n,n+1}, wherein the voltage at a pair of differentially interconnected receiver coils corresponds to the mathematical difference of the corresponding evaluation factors.

6. Method according to Claim 5,
wherein in the scope of step b, a measurement of a plurality of calibration measurement voltages of a first type M_{n,1} is carried out, a differential interconnection of a first reference coil (51) of the receiver coils (40) and a further receiver coil (40) from a first subset (53) of the receiver coils (40) respectively being connected on the input side to the operational amplifier (80).

7. Method according to Claim 6,
wherein in the scope of step b, a measurement of a plurality of calibration measurement voltages of a second type M_{n,2} is carried out, a differential interconnection of a second reference coil (52) of the receiver coils (40) and a further receiver coil (40) from a second subset (54) of the receiver coils (40) respectively being connected on the input side to the operational amplifier (80), the first reference coil (51) being different from the second reference coil (52), the first subset (53) being different from the second subset (54).

8. Method according to Claim 7,
wherein the receiver coils (40) are respectively assigned alternately to the first or second subset (53; 54) as seen in the measurement direction (11).

9. Method according to Claim 7 or 8,
wherein no other receiver coil (40) is arranged between the first and second reference coils (51; 52) in the measurement direction (11).

10. Method according to one of Claims 7 to 9,
wherein no other receiver coil (40) is arranged between the first reference coil (51) and a receiver coil of the first subset (53),
no other receiver coil (40) being arranged between the second reference coil (52) and a receiver coil of the second subset (54).

11. Method according to one of Claims 5 to 10,
wherein in the scope of step e, a starting receiver coil (50) is initially determined, this being the receiver coil (40) which is arranged most ideally, i.e. directly, facing an opening (22) in the material measure (20), the calculation being carried out on the basis of a working measurement voltage M_{n,n+1} which is assigned to the starting receiver coil (50).

## Revendications

1. Système de mesure de position (10) comportant un étalon de mesure (20) et un dispositif de balayage (30), qui sont mobiles l'un par rapport à l'autre et par rapport à une direction de mesure (11), dans lequel l'étalon de mesure (20) comporte une pluralité de repères (21) disposés en ligne par rapport à la direction de mesure (11), dans lequel le dispositif de balayage (30) comporte un dispositif à enroulement d'émission (41), dans lequel il est prévu une pluralité de bobines de réception (40) qui sont disposées en ligne par rapport à la direction de mesure (11) de manière à ce que le couplage inductif entre le dispositif à enroulement d'émission (41) et les bobines de réception (40) dépende de la position du dispositif de balayage (30) par rapport à l'étalon de mesure (20), **caractérisé en ce qu'**il est prévu au moins un amplificateur opérationnel (80) comportant des premier et second points de raccordement de sortie (83 ; 84), dans lequel les bobines de réception (40) sont reliées à l'au moins un amplificateur opérationnel (80) par l'intermédiaire d'un dispositif de commutation (70) de manière à ce qu'une bobine de réception unique (40) ou une paire unique de bobines de réception (40) interconnectées de manière différentielle puisse être raccordée côté entrée à l'au moins un amplificateur opérationnel (80).

2. Système de mesure de position selon la revendication 1,
dans lequel l'amplificateur opérationnel (80) est réalisé de manière entièrement différentielle.

3. Système de mesure de position selon l'une des revendications précédentes,
dans lequel le dispositif à enroulement d'émission (41) délimite une pluralité de surfaces d'émission séparées (42) qui sont disposées en ligne par rapport à la direction de mesure (11), dans lequel au plus une bobine de réception unique (40) est respectivement disposée dans les surfaces d'émission (42).

4. Système de mesure de position selon l'une des revendications précédentes,
dans lequel les repères (21) sont formés par des orifices ménagés dans une bande métallique (23), dans lequel les repères (21) codent une séquence de nombres aléatoires qui est choisie de manière à ce qu'à chaque position du dispositif de balayage (30) opposée à l'étalon de mesure (20), au moins une bobine de réception (50) soit entièrement disposée devant un orifice ménagé dans l'étalon de mesure (20).

5. Procédé de mise en fonctionnement d'un système de mesure de position (10) selon l'une des revendications précédentes,
dans lequel les première et seconde bornes de sortie (83 ; 84) de l'au moins un amplificateur opérationnel (80) définissent une tension de mesure (M), dans lequel le procédé comprend les étapes consécutives consistant à :
a) déplacer le dispositif de balayage (30) vers une position d'étalonnage à laquelle il est éloigné de l'étalon de mesure (20) de manière à ce que l'étalon de mesure (20) n'affecte pas le couplage inductif entre le dispositif à enroulement d'émission (41) et les bobines de réception (40) ;
b) alimenter en courant alternatif le dispositif à enroulement d'émission (41) et mesurer une pluralité de tensions de mesure d'étalonnage différentes M_{n,1} ; M_{n,2} ; M_{n,2} ; Mₙ à la position d'étalonnage du dispositif de balayage (30), dans lequel soit une bobine de réception unique (40), soit une paire unique de bobines de réception (40) interconnectées de manière différentielle est respectivement raccordée côté entrée à l'au moins un amplificateur opérationnel (80) ;
c) déplacer le dispositif de balayage (30) vers une position de travail à laquelle il est disposé en face de l'étalon de mesure (20) de manière à ce que l'étalon de mesure (20) affecte le couplage inductif entre le dispositif à enroulement d'émission (41) et les bobines de réception (40) ;
d) alimenter en courant alternatif le dispositif à enroulement d'émission (41) et mesurer une pluralité de tensions de mesure différentes M_{n,n+1} à la position de travail du dispositif de balayage (30), dans lequel une paire unique de bobines de réception (40) interconnectées de manière différentielle est respectivement raccordée côté entrée à l'au moins un amplificateur opérationnel (80) ; et
e) calculer les tensions de mesure d'étalonnage M_{n,1} ; M_{n,2} ; Mₙ et les tensions de mesure de travail M_{n,n+1} pour une pluralité de facteurs d'évaluation Aₙ, dans lequel la tension au niveau d'une paire de bobines de réception interconnectées de manière différentielle correspond à la différence mathématique entre les facteurs d'évaluation correspondants.

6. Procédé selon la revendication 5,
dans lequel, dans le cadre de l'étape b, une mesure de plusieurs tensions de mesure d'étalonnage du premier type M_{n,1} est effectuée, dans lequel une interconnexion différentielle d'une première bobine de référence (51) parmi les bobines de réception (40) et d'une autre bobine de réception (40) d'un premier sous-ensemble (53) des bobines de réception (40) est respectivement raccordée côté entrée à l'amplificateur opérationnel (80) .

7. Procédé selon la revendication 6,
dans lequel, dans le cadre de l'étape b, une mesure de plusieurs tensions de mesure d'étalonnage du second type M_{n,2} est effectuée, dans lequel une interconnexion différentielle d'une seconde bobine de référence (52) parmi les bobines de réception (40) et d'une autre bobine de réception (40) d'un second sous-ensemble (54) des bobines de réception (40) est respectivement raccordée côté entrée à l'amplificateur opérationnel (80), dans lequel la première bobine de référence (51) est différente de la seconde bobine de référence (52) et le premier sous-ensemble (53) est différent du second sous-ensemble (54).

8. Procédé selon la revendication 7,
dans lequel les bobines de réception (40) sont respectivement associées alternativement au premier ou au second sous-ensemble (53 ; 54) lorsqu'elles sont vues dans la direction de mesure (11).

9. Procédé selon la revendication 7 ou 8,
dans lequel aucune autre bobine de réception (40) n'est disposée entre les première et seconde bobines de référence (51 ; 52) dans la direction de mesure (11).

10. Procédé selon l'une des revendications 7 à 9, dans lequel aucune autre bobine de réception (40) n'est disposée entre la première bobine de référence (51) et une bobine de réception du premier sous-ensemble (53) et aucune autre bobine de réception (40) n'est disposée entre la seconde bobine de référence (52) et une bobine de réception du second sous-ensemble (54).

11. Procédé selon l'une des revendications 5 à 10, dans lequel, dans le cadre de l'étape e, on détermine en premier lieu une bobine de réception de démarrage (50), qui, de manière idéale, est la bobine de réception (40) disposée directement en face d'un orifice (22) ménagé dans l'étalon de mesure (20), dans lequel le calcul est effectué à partir d'une tension de mesure de travail M_{n,n+1} qui est associée à la bobine de réception de démarrage (50).
